**Europäisches Patentamt**

**European Patent Office**

**Office européen des brevets**

(19)

(11) Veröffentlichungsnummer: **0 065 206**
**B1**

# EUROPÄISCHE PATENTSCHRIFT

(12)

(45) Veröffentlichungstag der Patentschrift:
02.07.86

(21) Anmeldenummer: 82103853.6

(22) Anmeldetag: 05.05.82

(51) Int. Cl.⁴: **C 08 F 236/04, C 08 F 220/42**

(54) Verfahren zur Herstellung thermosensibilisierbarer Synthesekautschuk-Latices.

(30) Priorität: 16.05.81 DE 3119612

(43) Veröffentlichungstag der Anmeldung:
24.11.82 Patentblatt 82/47

(45) Bekanntmachung des Hinweises auf die Patenterteilung:
02.07.86 Patentblatt 86/27

(84) Benannte Vertragsstaaten:
**BE DE FR GB IT NL**

(56) Entgegenhaltungen:
**DD-A-136 618**
**DD-A-142 552**
**FR-A-2 244 787**
**US-A-3 344 103**

(73) Patentinhaber: BAYER AG, Konzernverwaltung RP
Patentabteilung, D-5090 Leverkusen 1 Bayerwerk
(DE)

(72) Erfinder: **Heins, Ferdinand, Dr., Linzer Strasse 18,
D-4019 Monheim- Baumberg (DE)**
Erfinder: **Matner, Martin, Dr., Dorfstrasse 14,
D-5068 Odenthal (DE)**
Erfinder: **Bross, Hermann Josef, Ing.grad.,
Dürscheider Weg 16, D-5090 Leverkusen 3 (DE)**

LIBER, STOCKHOLM 1986

EP 0 065 206 B1

## Beschreibung

Die vorliegende Erfindung betrifft ein Verfahren zur Herstellung thermosensibler Synthesekautschuk-Dispersionen mit geringer Scherempfindlichkeit durch Emulsionspolymerisation im Chargenbetrieb aus acyclischen, konjugierten Dienen, (Meth)acrylnitril sowie gegebenenfalls Arylvinylmonomeren und/oder $\alpha,\beta$-monoethylenisch ungesättigten Carbonsäuren in Gegenwart eines Peroxodisulfats als Initiator und eines Emulgators vom Sulfat- und/oder Sulfonattyp.

Das Wärmekoagulant-Verfahren beruht darauf, daß man Naturkautschuklatex, Synthesekautschuklatex oder Polyacrylat-Dispersionen durch Zusatz von Wärmesensibilisierungsmitteln thermosensibel einstellt, so daß die Latexmischung beim Erhitzen auf eine bestimmte Temperatur, den Koagulationspunkt, schlagartig koaguliert, während sie bei Raumtemperatur über einen längeren Zeitraum stabil bleibt und ihre Viskosität nicht verändert. Dieses Verfahren läßt sich zur Herstellung von Schaumgummi, Tauchartikeln und für eine gleichmäßige Verfestigung von Faservliesen hervorragend verwenden.

Bei der Vliesimprägnierung kommt es normalerweise zur Migration des Bindemittels während des Trocknens, wenn die Oberflächen des imprägnierten Vliesstoffs wechselseitig oder gleichzeitig erhitzt werden. Diese Migrationserscheinungen führen zu einer starken Verarmung an Bindemittel im Kern des Vlieses, so daß einerseits die Faserbindung im Kern verschlechtert wird, während andererseits die Anreicherung des Bindemittels in den Außenzonen zu einer starken Verhärtung des Griffs führt.

Dies ist insbesondere bei hochverdichteten Vliesen unerwünscht, die nach dem Trocknen gespalten und zur Herstellung von Kunstleder-Basismaterial eingesetzt werden, weil die Spaltstücke unterschiedliches technologisches Verhalten zeigen. Diese Nachteile werden im Wärmekoagulant-Verfahren und bei Verwendung sogenannter thermosensibler Binder vermieden, da das Bindemittel beispielsweise durch heißes Wasser, Dampf oder heiße Luft sowie Infrarot- oder Mikrowellen-Bestrahlung spontan zur Koagulation gebracht wird.

Polymerdispersionen werden als thermosensibel bezeichnet, wenn sie bei Raumtemperatur stabil sind, bei erhöhter, definierter Temperatur jedoch koagulieren. Man erreicht diese Thermosensibilität, indem man geeigneten polymerdispersionen sogenannte, dem Fachmann bekannte Thermosensibilisierungsmittel zusetzt. In der Patentliteratur werden als Thermosensibilisierungsmittel beispielsweise emulgierbare Salze, kationenaktive Stoffe wie organische, quartäre und polyquartäre Ammoniumsalze sowie insbesondere Verbindungen mit inverser Löslichkeit genannt. Zu den letzteren zählen Polyether, Polyetherthioether, Polyvinylalkylether, Organopolysiloxane und alkoxylierte Amine.

Es ist beispielsweise aus der DD-PS 136 618 bekannt, daß der Zusatz dieser Wärmesensibilisierungsmittel die Stabilität der Polymerdispersionen herabsetzt. So können diese Wärmesensibilisierungsmittel sogar zu einer Gelbildung bei Raumtemperatur führen, wenn die Latexmischung zu lange stehen bleibt. Ferner zeigen alle mit den obengenannten Thermosensibilisierungsmitteln wärmesensibel eingestellten Polymerdispersionen eine nur geringe mechanische Stabilität. Diese Instabilität äußert sich insbesondere bei der Verarbeitung in einer Empfindlichkeit gegenüber Scherkräften, z.B. beim Foulardieren durch Koagulatbildung.

Im allgemeinen lassen sich nur solche Polymerdispersionen gut thermosensibel einstellen, die keine besonders gute mechanische Stabilität besitzen. Zeigen die Latices dagegen eine hohe mechanische Stabilität oder weisen sie sogar Redispergierbarkeit des bei Raumtemperatur aufgetrockneten Polymerfilms auf, lassen sie sich mit den genannten Thermosensibilisierungsmitteln überhaupt nicht oder nur sehr schwer thermosensibel einstellen, so daß Naß- und Trockengel nicht mehr den anwendungstechnischen Erfordernissen entsprechen.

In der DD-PS 136 618 wird ein Verfahren zur Herstellung carboxylierter Butadien/Acrylnitril-Latices beschrieben, in dem man die Emulsionspolymerisation bei Temperaturen von 45 bis 65°C unter Verwendung eines Emulgatorgemisches aus wenigstens 50 % eines nichtionischen Tensids und weniger als 50 % eines anionischen Tensids durchführt. Diese Polymerdispersionen sollen sich zur Herstellung thermosensibler Mischungen mit sehr hoher mechanischer Stabilität eignen.

Diese Latices weisen jedoch in thermosensibler Mischung eine Reihe von Nachteilen auf. Während einerseits die erwähnte mechanische Stabilität nur im alkalischen Milieu gegeben ist, liegt andererseits der Koagulationspunkt der carboxylierten Nitrillatices trotz Mitverwendung anorganischer Salze in der thermosensiblen Mischung aufgrund des relativ hohen Gehalts an nichtionogenen Emulgatoren für die meisten Anwendungsgebiete zu hoch. Ein zu hoher Koagulationspunkt kann anwendungstechnisch sehr nachteilig sein, da er Migrationserscheinungen im Vlies zur Folge hat und dessen gleichmäßige Durchimprägnierung verhindert, so daß Spaltstücke zur Herstellung von Kunstleder-Basismaterial einen sehr unterschiedlichen Bindergehalt aufweisen. Überdies fällt das Naßgel aufgrund des hohen Anteils der nicht-ionogenen Emulgatoren und der besonderen Höhe des Koagulationspunkts bei diesen Dispersionen nicht kompakt aus, so daß sich die erhaltenen Vliese nur sehr schwer abquetschen und vom Serum befreien lassen.

Dieser Nachteil führt zum frühen Abstumpfen des Spaltmessers und Verschmieren des Schleifpapiers bei den anschließenden Spalt- und Schleifprozessen.

Aufgabe der vorliegenden Erfindung ist es, Synthesekautschuk-Dispersionen durch radikalische Emulsionspolymerisation herzustellen, welche sich trotz ausgezeichneter Laufstabilität mit den üblicherweise verwendeten Wärmekoagulantien thermosensibel einstellen lassen und bei deren Herstellung weitgehend auf nichtionogene Tenside verzichtet werden kann.

Überraschenderweise wurde gefunden, daß laufstabile, thermosensibel einstellbare Synthesekautschuk-Dispersionen durch Polymerisation eines Monomerengemisches aus (a) 90 bis 100 Gew.-Teilen eines Gemisches aus 10 bis 90 Gew.-Teilen eines oder mehrerer acyclischer konjugierter Diene mit 4 bis 9 Kohlenstoffatomen und 10 bis 90 Gew.-Teilen (Meth)acrylnitril, (b) 0 bis 10 Gew.-Teilen einer und/oder mehrerer α,ß-monoethylenisch ungesättigter Mono- oder Dicarbonsäuren und (c) 0 bis 25 Gew.-Teilen eines oder mehrerer Arylvinylmonomeren mit 8 bis 12 Kohlenstoffatomen, wobei bis zu 25 Gew.-% der vorstehend aufgeführten nicht-dissoziierenden Monomeren durch ein oder mehrere mit den vorstehend aufgeführten Monomeren copolymerisierbare Monomere ersetzt sein können, in Gegenwart von 0,2 bis 1,0 Gew.-%, bezogen auf die Gesamtmonomeren, eines Peroxodisulfates und 3,0 bis 8,0 Gew.-%, bezogen auf die Gesamtmonomeren, Emulgatoren, wobei das Verhältnis Wasser zu Monomere 1:1 bis 2:1 Gew.-Teile beträgt und die erhaltenen Polymerteilchen der Polymerdispersionen einen mittleren Teilchendurchmesser kleiner 150 nm besitzen, dadurch erhalten werden, daß in Primärfahrweise bei Temperaturen zwischen 20 und 50° C und pH-Werten von 2 bis 7 polymerisiert wird und als Emulgatoren solche vom Sulfat- und/oder Sulfonat-Typ verwendet werden.

Geeignete acyclische konjugierte Diene mit 4 bis 9 Kohlenstoffatomen sind z.B. Butadien-(1,3), 2-Methyl-butadien-(1,3), 2,3-Dimethylbutadien-(1,3), Piperylen, 2-Neopentylbutadien-(1,3) und andere substituierte Diene wie 2-Chlorbutadien-(1,3), 2-Cyanobutadien-(1,3) sowie substituierte geradkettige konjugierte Pentadiene und geradkettige oder verzweigte Hexadiene. Die Fähigkeit, mit Arylvinylmonomeren und (Meth)acrylnitril besonders gut zu copolymerisieren, machen Butadien-(1,3) zum bevorzugten Monomer.

Geeignete Arylvinylmonomere sind solche, bei denen die gegebenenfalls in α-Stellung alkylsubstituierte Vinylgruppe direkt an einen aus 6 bis 10 Kohlenstoffatomen bestehenden aromatischen Kern gebunden ist. Beispielhaft seien genannt: Styrol und substituierte Styrole wie 4-Methylstyrol, 3-Methylstyrol, 2,4-Dimethylstyrol, 2,4-Diethylstyrol, 4-Isopropylstyrol, 4-Chlorstyrol, 2,4-Dichlorstyrol, Divinylbenzol, α-Methylstyrol und Vinylnaphthalin.

Aus Gründen der Zugänglichkeit und wegen der Fähigkeit insbesondere mit Butadien-(1,3) hervorragend zu copolymerisieren, stellt Styrol das bevorzugte Monomere dar.

Als α,β-monoethylenisch ungesättigte Mono- und Dicarbonsäuren eignen sich beispielsweise Acrylsäure, Methacrylsäure, Itaconsäure, Fumarsäure und Maleinsäure sowie die Monoester der erwähnten Dicarbonsäuren wie Mono-$C_1$-$C_4$-alkylitaconat, -fumarat und -maleat.

Die weiteren mit den vorstehend angeführten Monomeren copolymerisierbaren Monomere sind beispielsweise Ester der Acryl- und/oder Methacrylsäure von Alkoholen mit bis zu 8 Kohlenstoffatomen sowie Diester aus Alkandiolen und α,β-monoethylenisch ungesättigten Monocarbonsäuren wie Ethylenglykoldiacrylat und Butandiol-(1,4)-diacrylat, Amide der α,β-monoethylenisch ungesättigten Mono- und Dicarbonsäuren wie Acrylamid und Methacrylamid und deren N-Methylolderivate sowie N-Alkoxymethyl-und N-Acyl-(meth)acrylamide mit 1 bis 4 Kohlenstoffatomen in der Alkoxygruppe, z.B. N-Methylol-(meth)acrylamid, N-Methoxymethyl-(meth)acrylamid, N-n-Butoxymethyl-(meth)acrylamid und N-Acetoxymethyl-(meth)acrylamid. Als weitere Comonomere kommen Vinylester von Carbonsäuren mit 1 bis 18 Kohlenstoffatomen, insbesondere Vinylacetat und Vinylpropionat, Vinylchlorid und Vinylidenchlorid, Vinylether wie Vinylmethylether, Vinylketone wie Vinylethylketon und heterocyclische Monovinylverbindungen wie Vinylpyridin in Frage.

Als Initiatoren verwendet man beim erfindungsgemäßen Verfahren Salze der Peroxodischwefelsäure wie Natrium-, Kalium- oder Ammoniumperoxodisulfat in Mengen von 0,2 bis 1,0 Gew.-%, bezogen auf die Gesamtmenge der Monomeren.

Als Emulgatoren werden höhere Fettalkoholsulfate, höhere Alkylsulfonate und Alkylarylsulfonate sowie deren Kondensationsprodukte mit Formaldehyd, höhere Hydroxyalkylsulfonate, Salze der Sulfobernsteinsäureester und sulfatierte Ethylenoxidaddukte eingesetzt. Die Mengen betragen 3,0 bis 8,0 Gew.-%, bezogen auf die Gesamtmenge der Monomeren.

Gegebenenfalls kann die Emulsionspolymerisation in Gegenwart von Polymerisationshilfsmitteln wie Puffersubstanzen, Chelierungsmitteln und Beschleunigern durchgeführt werden. Ebenso können Kettenübertragungsmittel wie Tetrabrommethan, Bromethylbenzol, Alkohole, höhere Alkylmercaptane und Dialkyldixanthogenate bei der Polymerisation mitverwendet werden. Die zu verwendende Art und Menge hängt u.a. von der Wirksamkeit der Verbindungen und der Menge des eingesetzten Diens ab und ist dem Fachmann geläufig.

Die erfindungsgemäßen Polymerdispersionen sollen mittlere Teilchendurchmesser unter 150 nm besitzen. Die Methoden zur Herstellung solcher feinteiliger Latices sind dem Fachmann bekannt und z.B. in Houben-Weyl, Methoden der organischen Chemie, Band XIV/I, Georg Thieme Verlag, Stuttgart, 1961, S. 335 und 375 ff beschrieben.

Die erfindungsgemäß hergestellten Synthesekautschuk-Dispersionen ergeben mit allen bekannten Thermosensibilisierungsmitteln laufstabile Mischungen und lassen sich bereits bei Temperaturen ab 35°C zur Koagulation bringen. Das Naßgel fällt ausgesprochen kompakt aus, so daß sich die erfindungsgemäß hergestellten Synthesekautschuk-Dispersionen hervorragend zur Imprägnierung hochverdichteter Vliese eignen, welche nach dem Abquetschen, Trocknen, Spalten und Schleifen zur Herstellung von Kunstleder-Basismaterial eingesetzt werden.

## Beispiel 1

In einem 40-l-Kessel mit Kreuzbalkenrührer wird eine Emulsion aus 17,9 kg Wasser, 6500 g Butadien, 3200 g Acrylnitril, 333 g 90 gew.-%iger Methacrylsäure und 50 g tert.-Dodecylmercaptan sowie 600 g Natriumlaurylsulfat hergestellt. Nach Aufheizen auf 40°C wird die Emulsionspolymerisation mit einer Lösung von 40 g Kaliumperoxodisulfat in 900 g Wasser initiiert und bei dieser Temperatur zu Ende geführt. Nach 22,5 Stunden wird mit einer Lösung von 80 g 25 gew.-%igem Diethylhydroxylamin in 200 g Wasser abgestoppt und bei Raumtemperatur entgast. Man erhält eine Polymerdispersion mit einem pH von 5,4, einem Feststoffgehalt von 35,0 Gew.-% und einem mittleren Teilchendurchmesser unter 80 nm (Lichtstreuung).

## Thermosensibilisierung

286 g dieser Dispersion werden mit 2,4 g einer 50 gew.-%igen Emulsion eines Alterungsschutzmittels auf Basis phenylierter Diphenylamine und 10 g einer 10 gew.-%igen wäßrigen Natriumhexametaphosphat-Lösung und 15 g eines Thermosensibilisierungsmittels auf Basis eines Polyetherpolyurethans in 85 g Wasser versetzt. Diese Mischung zeigt einen Koagulationspunkt von 53°C.

Die thermosensible Mischung ist sehr laufstabil und übersteht einen Rührtest mit einem Flügelrührer (Drehzahl 1500 UpM) während 55 Minuten bei Raumtemperatur ohne Koagulatbildung.

## Beispiel 2

Beispiel 1 wird unter Austausch des Natriumlaurylsulfats durch das Natriumsulfonat eines Gemisches langkettiger Paraffinkohlenwasserstoffe einer mittleren Kettenlänge von 15 Kohlenstoffatomen wiederholt. Man erhält eine Polymerdispersion mit einem Feststoffgehalt von 35,1 Gew.-%, einem pH von 5,1 und einem mittleren Teilchendurchmesser unter 80 nm (Lichtstreuung).

## Thermosensibilisierung

Die Thermosensibilisierung wird in Analogie zu Beispiel 1 durchgeführt. Der Koagulationspunkt beträgt 39°C.

Beim in Beispiel 1 beschriebenen Rührtest erweist sich die thermosensible Mischung als sehr scherstabil und übersteht den bei Raumtemperatur durchgeführten Rührtest 62 Minuten ohne Koagulatbildung.

## Beispiel 3

Beispiel 1 wird unter Austausch des Natriumlaurylsulfats durch Natrium-di-2-ethylhexyl-sulfosuccinat wiederholt. Es wird eine Polymerdispersion mit einem Feststoffgehalt von 35,5 Gew.-%, einem pH von 4,8 und einem mittleren Teilchendurchmesser von 82 nm erhalten (Lichtstreuung).

## Thermosensibilisierung

Bei der analog Beispiel 1 durchgeführten Thermosensibilisierung erhält man einen Koagulationspunkt von 44°C.

Der Rührtest nach Beispiel 1 ergibt eine Rührzeit von 57 Minuten bei Raumtemperatur bis zum Auftreten von Koagulat.

## Beispiel 4

In einem 40-l-Kessel mit Kreuzbalkenrührer wird eine Emulsion aus 17,9 kg Wasser, 6500 g Butadien, 1600 g Acrylnitril, 1500 g Styrol, 444 g 90 gew.-%iger Methacrylsäure, 70 g tert.-Dodecylmercaptan und 600 g Natriumlaurylsulfat nach Aufheizen auf 45°C mit einer Lösung von 30 g Kaliumperoxodisulfat in 900 g Wasser zur Polymerisation gebracht. Die Emulsionspolymerisation wird bei dieser Temperatur fortgeführt und nach 26 Stunden durch Zugabe einer Lösung von 80 g 25 gew.%igem Diethylhydroxylamin in 200 g Wasser abgebrochen. Nach Entgasung bei Raumtemperatur erhält man eine Dispersion mit einem Feststoffgehalt von 34,9 Gew.-% und einem pH von 5,6. Der mittlere Teilchendurchmesser beträgt 130 nm (Lichtstreuung).

## Thermosensibilisierung

Die analog Beispiel 1 durchgeführte Thermosensibilisierung führt zu einem Koagulationspunkt von 55°C. Der in Beispiel 1 beschriebene Rührtest ergibt eine Stabilität der Mischung von 53 Minuten bei Raumtemperatur.

## Beispiel 5

In einem 40-l-Kessel mit Kreuzbalkenrührer wird eine Emulsion aus 9300 g Wasser, 6700 g Butadien, 3000 g Acrylnitril, 300 g N-Methoxymethyl-methacrylamid und 50 g tert.-Dodecylmercaptan sowie 600 g Natriumlaurylsulfat und 10 g Natriumdiphosphat auf 35°C erhitzt. Durch Zugabe einer Lösung von 30 g Kaliumperoxodisulfat in 700 g Wasser wird die Emulsionspolymerisation gestartet und bei dieser Temperatur zu Ende geführt. Nach 17 Stunden wird mit einer Lösung von 80 g 25 gew.-%igem Diethylhydroxylamin in 200 g Wasser abgestoppt, entgast und mit verdünnter wäßriger Amnoniak-Lösung pH 7 eingestellt. Der mittlere Teilchendurchmesser beträgt 140 nm (Lichtstreuung), die Feststoffkonzentration 48,6 Gew.-%.

## Thermosensibilisierung

200 g dieser Dispersion werden mit 2,4 g einer 50 gew.%igen Emulsion eines Alterungsschutzmittels auf Basis phenylierter Diphenylamine und 10 g einer 10 gew.-%igen wäßrigen Natriumhexametaphosphat-Lösung und 15 g eines Thermosensibilisierungsmittels auf Basis eines Polyetherpolyurethans in 85 g Wasser versetzt. Diese Mischung zeigt einen Koagulationspunkt von 46°C.

Der nach Beispiel 1 bei Raumtemperatur durchgeführte Rührtest ergibt eine Stabilität von 68 Minuten.

## Vergleichsbeispiel 1

Im Vergleichsbeispiel 1 wird die Initiierung nicht mit einem Peroxodisulfat durchgeführt.

In einem 40-l-Autoklaven mit Kreuzbalkenrührer wird eine Emulsion von 18,6 kg Wasser, 6500 g Butadien, 3000 g Acrylnitril, 333 g 90 gew.-%iger Methacrylsäure, 50 g tert.-Dodecylmercaptan sowie 600 g Natriumlaurylsulfat bei 20°C mit Lösungen von 5 g tert.-Butylhydroperoxid in 200 g Acrylnitril und 5 g Natriumformaldehydsulfoxylatdihydrat in 200 g Wasser versetzt. Dadurch wird die Emulsionspolymerisation initiiert und bei dieser Temperatur zu Ende geführt. Nach 19 Stunden wird mit einer Lösung von 80 g Diethylhydroxylamin in 200 g Wasser abgestoppt und entgast. Man erhält eine polymerdispersion mit einem mittleren Teilchendurchmesser von 130 nm (Lichtstreuung), einem pH von 5,3 und einem Feststoffgehalt von 34,3 Gew.-%.

## Thermosensibilisierung

Die Thermosensibilisierung wird in Analogie zu Beispiel 1 durchgeführt. Der Koagulationspunkt liegt bei 75°C.

Beim nach Beispiel 1 durchgeführten Rührtest tritt nach 11 Minuten bereits Koagulat auf.

## Vergleichsbeispiel 2

Im Vergleichsbeispiel 2 werden weniger als 3 Gew.-Teile anionogenes Tensid auf 100 Gew.-Teile Monomere eingesetzt.

In einem 40-l-Autoklaven mit Kreuzbalkenrührer wird eine Emulsion aus 11620 g Wasser, 5800 g Butadien, 3600 g Acrylnitril, 333 g 90 gew.-%iger Methacrylsäure, 300 g N-Methoxymethylmethacrylamid und 30 g tert.-Dodecylmercaptan sowie 333 g Natriumdodecylbenzolsulfonat (75 gew.-%ig) bei 35°C mit einer Lösung von 30 g Kaliumperoxodisulfat in 700 g Wasser versetzt und dadurch die Polymerisation initiiert. Man hält den Ansatz bei 35°C, stoppt nach 16 Stunden mit einer Lösung von 80 g 25 gew.-%igem Diethylhydroxylamin in 200 g Wasser ab und entgast. Man erhält eine Polymerdispersion mit einer Feststoffkonzentration von 41,9 Gew.-%, einem pH von 5,8 und einem mittleren Teilchendurchmesser von weniger als 80 nm.

## Thermosensibilisierung

238 g dieser Dispersion werden mit 2,4 g einer 50 gew.-%igen Emulsion eines Alterungsschutzmittels auf Basis phenylierter Diphenylamine sowie 10 g einer 10 gew.-%igen wäßrigen Natriumhexametaphosphat-Lösung und 15 g eines Thermosensibilisierungsmittels auf Basis eines Polyetherpolyurethans in 85 g Wasser versetzt. Man erhält einen Koagulationspunkt von 50°C.

Beim nach Beispiel 1 durchgeführten Rührtest tritt bereits nach 15 Minuten Koagulat auf.

## Patentanspruch

Verfahren zur Herstellung laufstabiler, thermosensibel einstellbarer Synthesekautschuk-Dispersionen durch Polymerisation eines Monomerengemisches aus (a) 90 bis 100 Gew.-Teilen eines Gemisches aus 10 bis 90 Gew.-Teilen eines oder mehrerer acyclischer konjugierter Diene mit 4 bis 9 Kohlenstoffatomen und 10 bis 90 Gew.-Teilen (Meth)acrylnitril, (b) 0 bis 10 Gew.-Teilen einer oder mehrerer α,β-monoethylenisch ungesättigten Mono- und/oder Dicarbonsäuren und (c) 0 bis 25 Gew.-Teilen eines oder mehrerer Arylvinylmonomeren mit 8 bis 12 Kohlenstoffatomen, wobei bis zu 25 Gew.-% der vorstehend aufgeführten nicht-dissoziierenden Monomeren durch ein oder mehrere mit den vorstehend aufgeführten Monomeren copolymerisierbare Monomere ersetzt sein können, in Gegenwart von 0,2 bis 1,0 Gew.-%, bezogen auf die Gesamtmonomeren, eines Peroxodisulfates und 3,0 bis 8,0 Gew.-%, bezogen auf die Gesamtmonomeren, Emulgatoren, wobei das Verhältnis Wasser zu Monomere 1:1 bis 2:1 Gew.-Teile beträgt und die erhaltenen Polymerteilchen der Polymerdispersionen einen mittleren Teilchendurchmesser kleiner 150 nm besitzen, dadurch gekennzeichnet, daß in Primärfahrweise bei Temperaturen zwischen 20 und 50°C und pH-Werten von 2 bis 7 polymerisiert wird und als Emulgatoren solche vom Sulfat- und/oder Sulfonat-Typ verwendet werden.

## Claim

A process for the production of flow-resistant thermosensitisable synthetic rubber dispersions by polymerising a monomer mixture of (a) from 90 to 100 parts, by weight, of a mixture of from 10 to 90 parts, by weight, of one or more acyclic conjugated dienes containing from 4 to 9 carbon atoms and from 10 to 90 parts, by weight, of (meth)acrylonitrile, (b) from 0 to 10 parts, by weight, of one or more α,β- monoethylenically unsaturated monocarboxylic and/or dicarboxylic acids, and (c) from 0 to 25 parts, by weight, of one or more aryl vinyl monomers containing from 8 to 12 carbon atoms, up to 25%, by weight, of the nondissociating monomers mentioned above being replaceable by one or more monomers copolymerisable with the above-mentioned monomers, in the presence of from 0.2 to 1.0%, by weight, based on the total monomers, of a peroxodisulphate and from 3.0 to 8.0%, by weight, based on the total monomers, of emulsifiers, the ratio of water to monomer amounting to between 1:1 to 2:1 parts, by weight, and the resulting polymer particles of the polymer dispersions having an average particle diameter of less than 150 nm, characterised in that polymerisation is carried out in the primary mode of operation at temperatures between 20 and 50°C and at pH values of from 2 to 7 and emulsifiers of the sulphate and/or sulponate type are used as the emulsifiers.

## Revendication

Procédé de production de dispersions de caoutchouc synthétique stables à l'écoulement, pouvant etre rendues thermosensibles, par polymérisation d'un mélange de monomères comprenant (a) 90 à 100 parties en poids d'un mélange de 10 à 90 parties en poids d'un ou plusieurs diènes conjugués acycliques ayant 4 à 9 atomes de carbone et de 10 à 90 parties en poids de (méth)acrylonitrile, (b) 0 à 10 parties en poids d'un ou plusieurs acides mono- et/ou dicarboxyliques à insaturation α,β monoéthylénique et (c) 0 à 25 parties en poids d'un ou plusieurs monomères arylvinyliques ayant 8 à 12 atomes de carbone, une proportion allant jusqu'à 25% en poids des monomères non dissociables indiqués ci-dessus pouvant être remplacés par un ou plusieurs des monomères copolymérisables avec les monomères indiqués ci-dessus, en présence de 0,2 à 1,0% en poids, par rapport aux monomeres totaux d'un peroxodisulfate et de 3,0 à 8,0% en poids, par rapport aux monomères totaux,d'émulsionnants, le rapport de l'eau aux monomères s'élevant à une valeur de 1:1 à 2:1 parties en poids et les particules polymériques obtenues des dispersions de polymères possèdent un diamètre moyen inférieur à 150 nm, caractérisé en ce qu'on conduit la polymérisation selon le mode primaire entre 20 et 50°C et à des valeurs de pH de 2 à 7 et on utilise comme émulsionnants des émulsionnants du type sulfate et/ou du type sulfonate.